# EUROPÄISCHE PATENTANMELDUNG

(11) **EP 4 545 389 A1**
(43) Veröffentlichungstag der Anmeldung: **30.04.2025**
(21) Anmeldenummer: 24207403.7
(22) Anmeldetag: 18.10.2024
(51) Int. Cl.: B62J 45/411, B62J 45/421, B62M 6/50, F16D 41/24

(54) **ANTRIEBSANORDNUNG FÜR EIN FAHRRAD**

(30) Priorität: 24.10.2023 DE 102023210476
(71) Anmelder: ZF Friedrichshafen AG, 88046 Friedrichshafen (DE)
(72) Erfinder: Neumann, Finn, 88212 Ravensburg (DE); Holder, Kevin, 88074 Meckenbeuren (DE)
(74) Vertreter: ZF Friedrichshafen AG

(57) **Zusammenfassung**

Die Erfindung bezieht sich auf eine Antriebsanordnung für ein Fahrrad, wobei die Antriebsanordnung einen Klinkenfreilauf (14) aufweist. Der Klinkenfreilauf (14) weist einen ersten Ring (20) mit daran beweglich gelagerten Klinken (24) und einen zweiten Ring (22) mit einer Verzahnung (26) auf. Zudem weist die Antriebsanordnung wenigstens eine Sensorvorrichtung auf, welche dazu ausgebildet ist, eine Verformung des ersten Rings (20) des Klinkenfreilaufs (14) aufgrund einer anliegenden Antriebskraft zu erfassen. Die Sensorvorrichtung weist pro Klinke (24) jeweils einen zugeordneten Verformungssensor (28) aufweist. Zudem bezieht sich die Erfindung auf ein Verfahren und ein Fahrrad.

## Beschreibung

### Technisches Gebiet

Die vorliegende Erfindung bezieht sich auf eine Antriebsanordnung für ein Fahrrad. Zudem bezieht sich die vorliegende Erfindung auf ein Verfahren zum Betreiben einer Antriebsanordnung eines Fahrrads und auf ein Fahrrad.

### Stand der Technik

Bei Fahrrädern ist es bekannt, einen Freilauf vorzusehen. Damit kann beispielsweise eine Tretkurbelwelle von einem angetriebenen Laufrad abgekoppelt werden. So kann das Fahrrad rollen, ohne dass dabei jeweilige Pedale des Fahrrads mitdrehen. Bei Pedelecs kann mit einem Freilauf beispielsweise auch ein Antriebsmotor abgekoppelt werden. In einem Sperrzustand kann der Freilauf dagegen zwei Wellen miteinander drehfest verbinden, um beispielsweise eine Übertragung von Antriebskraft zu ermöglichen.

Durch eine Erfassung einer Verformung eines Bauteils des Freilaufs kann dabei die übertragene Antriebskraft erfasst werden, beispielsweise um einen Antrieb zu steuern. Allerdings kann es je nach Bauform des Freilaufs sowie einer relativen Position, in welcher die beiden Wellen miteinander verbunden wurde, zu Störgrößen kommen. Beispielsweise kann im Sperrzustand in dem Freilauf eine Radialkraft wirken, welche den Freilauf abhängig von einer Sperrzustandsposition verformt. Je nach Fertigungstoleranzen und Abnutzung können jeweilige Klinken des Freilaufs auch unterschiedlich mit einer Verzahnung in dem Sperrzustand eingreifen. Auch dadurch können Störgrößen verursacht werden, welche nicht direkt zu der übertragenen Antriebskraft korrespondieren. Entsprechend kann die erfasste Verformung nur ungenau zu der übertragenen Antriebskraft korrespondieren.

In der DE 10 2012 100 682 A1 ist ein Drehmomentsensor und ein Freilauf beschrieben, der ein erstes Drehelement aufweist, durch das ein zu bestimmendes Drehmoment auf ein zweites, zu dem ersten Drehelement koaxiales Drehelement in einer Drehrichtung übertragbar ist. Zudem wird eine Einrichtung zur Ermittlung einer Verdrehung des ersten Drehelements gegen das zweite Drehelement in der genannten Drehrichtung sowie zur Bestimmung des Drehmoments anhand der ermittelten Verdrehung beschrieben. Die Drehmomentbestimmung ist so sehr aufwendig.

### Darstellung der Erfindung

Ein erster Aspekt betrifft eine Antriebsanordnung für ein Fahrrad. Die Antriebsanordnung kann beispielsweise ein Getriebe, eine Tretkurbelwelle, ein Laufrad und jeweilige Kraftübertragungselemente zu dem Laufrad aufweisen. Die Antriebsanordnung kann einen Antriebsmotor aufweisen, beispielsweise ausgebildet als Elektromotor. Die Antriebsanordnung kann für ein als Pedelec ausgebildetes Fahrrad ausgebildet sein. Die Antriebsanordnung kann dazu ausgebildet sein, eine Antriebskraft von einem Fahrradfahrer und optional von dem Antriebsmotor an das Laufrad zu übertragen.

Die Antriebsanordnung weist einen Klinkenfreilauf auf. Ein Klinkenfreilauf wird auch als Sperrklinkenfreilauf bezeichnet. Ein Freilauf kann beispielsweise Drehmoment nur in eine Drehrichtung übertagen, wobei sich der Freilauf dann in seinem Sperrzustand befindet. Bei einer relativen Drehrichtungsumkehr wird eine Verbindung dagegen selbsttätig gelöst, womit sich der Freilauf dann in seinem Freigabezustand befindet. In dem Sperrzustand können sich jeweilige Klinken des Klinkenfreilaufs in einem Eingriff befinden. In dem Freigabezustand gleiten die Klinken des Klinkenfreilaufs dagegen beispielsweise ab. Der Klinkenfreilauf kann beispielsweise dazu ausgebildet sein, einen Antrieb, wie eine Tretkurbelwelle, von einem Abtrieb zu entkoppeln. Beispielsweise kann der Klinkenfreilauf die Tretkurbelwelle auch von dem Antriebsmotor entkoppeln oder den Antriebsmotor von der Tretkurbelwelle. Der Klinkenfreilauf kann auch dazu ausgebildet sein, einen Gang in dem Getriebe der Antriebsanordnung zu verändern.

Der Klinkenfreilauf weist wenigstens einen ersten Ring und einen zweiten Ring auf. Die beiden Ringe können permanent drehfest jeweils mit einer Welle der Antriebsanordnung verbunden sein. Die Ringe können auch eine Scheibe ausbilden. Beispielsweise kann ein als Innenring ausgebildeter Ring mit einer sich radial erstreckenden Wandung mit einer Welle drehfest verbunden sein. Die Ringe können auch jeweilige nicht ringförmige Teilbereiche, Ausnehmungen und alternativ oder zusätzlich dezentrale Durchgangsöffnungen aufweisen.

Der zweite Ring weist eine Verzahnung auf. Die Verzahnung kann sich beispielsweise entlang eines Umfangs des zweiten Rings radial innen oder außen erstrecken. Die Verzahnung kann für einen Eingriff durch die Klinken ausgebildet sein. Die Verzahnung kann Zahnspitzen aufweisen, welche in Richtung des ersten Rings vorstehen, und dazwischen liegende Täler.

Der Klinkenfreilauf weist beweglich an dem ersten Ring gelagerte Klinken auf. Der Klinkenfreilauf kann eine Vielzahl von diesen Klinken aufweisen, beispielsweise zwei, drei, vier oder mehr Klinken. Durch mehr Klinken kann ein höheres Drehmoment übertragbar sein. Die Klinken können auch als Sperrklinke bezeichnet werden. Die Klinken können beispielsweise an einem dem zweiten Ring zugewandten Ende jeweils verschwenkbar um eine zugeordnete axiale Drehachse an dem ersten Ring gelagert sein. Die Klinken befinden sich beispielsweise in einem Sperrzustand des Klinkenfreilaufs in Eingriff mit der Verzahnung des zweiten Rings. Die Klinken können bezüglich des Eingriffs beispielsweise federvorgespannt sein. In einem Freigabezustand ist der Eingriff der Klinken mit der Verzahnung aufgehoben. In dem Sperrzustand sind die beiden Ringe drehfest miteinander über den Eingriff verbunden. In dem Freigabezustand gleiten die Klinken beispielsweise an der Verzahnung ab und die beiden Ringe können relativ zueinander in eine Drehrichtung rotieren. Die Klinken können beispielsweise ein Verdrehen der beiden Ringe zueinander in eine Drehrichtung erlauben und in eine entgegengesetzte Drehrichtung ab einem Eingriff der Klinke mit der Verzahnung unterbinden. Die Klinken und die Verzahnung können an zueinander zugewandten Seiten der beiden Ringe angeordnet sein.

Die beiden Ringe können koaxial zueinander angeordnet sein. Die beiden Ringe können in dem gleichen Axialbereich angeordnet sein. Die beiden Ringe können jeweils um eine Mittelachse drehbar gelagert sein. Beispielsweise ist einer der beiden Ringe mit einer Eingangswelle des Klinkenfreilaufs bzw. einer Welle der Antriebsanordnung permanent drehfest verbunden. Beispielsweise ist ein anderer der beiden Ringe mit einer Ausgangswelle des Klinkenfreilaufs bzw. einer Welle der Antriebsanordnung permanent drehfest verbunden.

Die Antriebsanordnung weist eine Sensorvorrichtung auf, welche dazu ausgebildet ist, eine Verformung des ersten Rings des Klinkenfreilaufs aufgrund einer anliegenden Antriebskraft zu erfassen. Die Antriebskraft kann beispielsweise an den zweiten Ring in dem Sperrzustand übertragen werden oder von dem zweiten Ring an den ersten Ring in dem Sperrzustand übertragen werden. Die Antriebskraft kann beispielsweise durch einen Fahrer des Fahrrads an jeweiligen Pedalen in die Antriebsanordnung eingeleitet werden. Die Antriebskraft kann alternativ oder zusätzlich durch den Antriebsmotor in die Antriebsanordnung eingeleitet werden. Die erfasste Verformung kann beispielsweise eine Aussage über ein übertragenes Drehmoment erlauben. Die anliegende Antriebskraft kann zu dem übertragenen Drehmoment korrespondieren. Durch die Erfassung kann beispielsweise eine Leistungsmessung, eine automatische Steuerung einer Gangschaltung des Fahrrads und alternativ oder zusätzlich eine Steuerung des Antriebsmotors in Abhängigkeit von der an dem Klinkenfreilauf anliegenden Antriebskraft möglich sein. Die Steuerung kann auch direkt in Abhängigkeit der erfassten Verformung erfolgen. Auch weitere Funktionen können auf dieser Erfassung basieren, wie eine Bestimmung einer Abnutzung des Klinkenfreilaufs.

Die Sensorvorrichtung weist pro Klinke jeweils einen zugeordneten Verformungssensor auf. Jeder Verformungssensor ist beispielsweise dazu ausgebildet, die Verformung in einem Messbereich, beispielsweise neben oder an der zugeordneten Klinke, zu erfassen. Durch das Vorsehen eines Verformungssensors pro Klinke kann eine Verformung des ersten Rings an jeder Klinke erfasst werden. Dadurch ist eine getrennte Aussage über die pro Klinke übertragene Antriebskraft möglich. Ebenso ist dadurch eine Aussage für jede Klinke über ein dort übertragenes Drehmoment möglich. Die Sensorvorrichtung kann dazu ausgebildet sein, die an jeder Klinke übertragene Antriebskraft separat zu erfassen. Beispielsweise können durch die zugeordnete Verformungsmessungen pro Klinke Formtoleranzen in Wellen, Verzahnungen und den Klinken oder Toleranzen in einer Konzentrizität von Bauteilen der Antriebsanordnung ausgeglichen werden, um jeweilige Betriebsgrößen besonders genau messen zu können. Solche Toleranzen und jeweilige individuelle Abweichungen in einzelnen Antriebsanordnung durch Fertigungstoleranzen und Montagetoleranzen können einen ungleichmäßigen Eingriff der Klinken mit der Verzahnung verursachen. Dadurch können die Klinken unterschiedlich viel Kraft übertragen und auch verschieden stark belastet werden. Selbst bei keinerlei Toleranzabweichungen können in der Antriebsanordnung herrschende Belastungen Bauteile verformen und dadurch Klinken unterschiedlich stark belastet werden. Diese Abweichungen, welche bei jeder Klinke auch den ersten Ring unterschiedlich verformen können, können auch abhängig von einer relativen Drehposition der beiden Ringe zueinander sein.

Durch das Vorsehen von einem Verformungssensor pro Klinke können diese Effekte durch die Sensorvorrichtung jedoch teilweise oder sogar vollständig kompensiert werden. Die Sensorvorrichtung kann beispielsweise dazu ausgebildet sein, zu erfassen, wieviel Last durch jede Klinke übertragen wird. Die Verformungssensoren können für jede einzelne Klinke einen zugeordneten Messwert erzeugen. Dadurch werden auch neue Auswertmöglichkeiten geschaffen, was noch im Folgenden erläutert wird.

Die Verformungssensoren können an dem ersten Ring befestigt sein. Die Verformungssensoren können in Umfangsrichtung gleichmäßig beabstandet angeordnet sein. Die Verformungssensoren können in einem gleichen Umfang an dem ersten Ring bzw. mit einem gleichen radialen Abstand zu einer Drehachse angeordnet sein. Die Verformungssensoren können beispielsweise axial auf Höhe des Klinkenfreilaufs angeordnet sein. Die Sensorvorrichtung kann beispielsweise dazu ausgebildet sein, die Verformung elektroresistiv, magnetisch, optisch oder auch akustisch zu bestimmen. Beispielsweise kann die Sensorvorrichtung mehrere an dem ersten Ring befestigte Dehnungsmessstreifen als Verformungssensoren aufweisen. Alternativ können beispielsweise auch Hall-Sensoren genutzt werden. Die Sensorvorrichtung kann eine Auswertvorrichtung aufweisen, um jeweilige Sensorsignale auszuwerten. Die Klinken können in Umfangsrichtung gleichmäßig beabstandet sein. Die Klinken können beispielsweise symmetrisch an dem ersten Ring angeordnet sein. Die Verformungssensoren können symmetrisch an dem ersten Ring angeordnet sein. Alle Verformungssensoren können gleich zu der zugeordneten Klinke relativ angeordnet sein. Beispielsweise kann jeder Verformungssensor einen gleichen radialen Abstand und gleichen Abstand in Umfangsrichtung zu dessen zugeordneter Klinke aufweisen.

Der erste Ring ist beispielsweise drehfest mit der Tretkurbelwelle verbunden. Beispielsweise können der erste Ring und die Tretkurbelwelle einstückig ausgebildet sein. Die Sensorvorrichtung kann dann dazu ausgebildet sein, eine Biegung des ersten Rings und alternativ oder zusätzlich eine Biegung der Tretkurbelwelle zu erfassen. Die Verformungssensoren können so eine Durchbiegung der Tretkurbelwelle im Betrieb der Antriebsanordnung erfassen.

Der zweite Ring kann eine in Umfangsrichtung durchgehende Verzahnung aufweisen. Dadurch kann ein Eingriff besonders schnell und beispielsweise bereits bei einem geringem Drehwinkel in Sperrrichtung sichergestellt werden. Zudem kann der zweite Ring so einfach zu fertigen sein. Beispielsweise kann die Verzahnung durch eine Mantelfläche des zweiten Rings gebildet sein. Die Verzahnung kann beispielsweise radial innen oder radial außen angeordnet sein.

In einer Ausführungsform der Antriebsanordnung kann es vorgesehen sein, dass der erste Ring als Innenring ausgebildet ist und der zweite Ring als Außenring. Der zweite Ring kann radial außen zu dem ersten Ring angeordnet sein. Die Verzahnung kann dann radial innen an dem zweiten Ring angeordnet sein. Dadurch kann die Fertigung besonders kostengünstig und einfach sein. Zudem können jeweilige Sensoren so einfach an dem ersten Ring angebracht sein. Die jeweiligen Klinken können beispielsweise radial außen an dem ersten Ring gelagert sein.

In einer Ausführungsform der Antriebsanordnung kann es vorgesehen sein, dass der erste Ring als Außenring ausgebildet ist und der zweite Ring als Innenring. Der zweite Ring kann radial innen zu dem ersten Ring angeordnet sein. Die Verzahnung kann dann radial außen an dem zweiten Ring angeordnet sein. Die jeweiligen Klinken können beispielsweise radial innen an dem ersten Ring gelagert sein. Dadurch kann die Montage der Klinken vereinfacht sein.

In einer Ausführungsform der Antriebsanordnung kann es vorgesehen sein, dass jeder Verformungssensor benachbart zu der zugeordneten Klinke an dem ersten Ring angeordnet ist. Beispielsweise kann jeder der Verformungssensoren in einem gleichen Umfangsbereich und alternativ oder zusätzlich in einem gleichen radialen Abstand zu der Drehachse wie die zugeordnete Klinke angeordnet sein. Ein Umfangsbereich kann beispielsweise zwischen der Drehachse und entgegengesetzten Enden einer Klinke oder einer Tasche, in welcher die Klinke angeordnet ist, in Umfangsrichtung aufgespannt sein. Die Verformungssensoren können auch radial innen oder radial außen zu den Klinken angeordnet sein. Bei einer benachbarten Anordnung kann der Messbereich der Sensoren möglichst nah an oder sogar auf der zugeordneten Klinke liegen. Die Verformungssensoren können auch in Umfangsrichtung und alternativ oder zusätzlich radialer Richtung versetzt zu der zugeordneten Klinke angeordnet sein.

In einer Ausführungsform der Antriebsanordnung kann es vorgesehen sein, dass der erste Ring in Umfangsbereichen zwischen benachbarten Klinken jeweils eine Ausnehmung aufweist. Alternativ oder zusätzlich kann der erste Ring in Umfangsbereichen zwischen benachbarten Verformungssensoren jeweils eine Ausnehmung aufweisen. Beispielsweise kann zwischen benachbarten Klinken ein Freiraum in Umfangsrichtung wenigstens in dem gleichen radialen Abstand wie der Klinken zu der Drehachse vorgesehen sein. Durch die Ausnehmung kann ein Kraftfluss zwischen unterschiedlichen Klinken und damit auch deren zugeordneten Verformungssensoren vermieden werden. Dadurch kann ein Einfluss von anderen Klinken und der dort übertragenen Kraft auf eine der Klinken reduziert oder sogar ganz verhindert werden. Dadurch kann jeder Verformungssensor eine Verformung erfassen, welche besonders präzise zu der an der zugeordneten Klinke anliegenden Kraft korrespondiert. Jeweilige Klinkenlasten können durch eine räumliche Trennung aufgrund jeweiliger Ausnehmungen so besonders präzise erfasst werden, ohne dass diese Erfassung von anderen Klinkenlasten beeinflusst wird.

In einer Ausführungsform der Antriebsanordnung kann es vorgesehen sein, dass jeder Verformungssensor in Umfangsrichtung hinter der zugeordneten Klinke in einer Richtung einer von der jeweiligen Klinke auf den ersten Ring wirkenden Kraft an dem ersten Ring angeordnet ist. Eine Klinke kann beispielsweise ein erstes Ende haben, welches im Eingriff mit der Verzahnung im Sperrzustand des Klinkenfreilaufs ist. Eine Klinke kann ein zweites Ende haben, welches beispielsweise entgegengesetzt zu dem ersten Ende ist. Dieses zweite Ende stützt sich beispielsweise im Sperrzustand an dem ersten Ring ab, beispielsweise in einer zugeordneten Tasche. Dieses zweite Ende kann drehbar an dem ersten Ring gelagert sein. Ein von dem ersten Ende zu dem zweiten Ende weisender Vektor kann der Richtung der von der jeweiligen Klinke auf den ersten Ring wirkenden Kraft entsprechen. Ein Umfangsrichtungsanteil dieses Vektors kann der Richtung entsprechen, in welcher jeder Verformungssensor hinter der zugeordneten Richtung angeordnet ist. So kann der Messbereich besonders gut in einem Kraftübertragungspfad liegen und die erfasste Verformung so eine besonders sinnvolle Messgröße sein.

In einer Ausführungsform der Antriebsanordnung kann es vorgesehen sein, dass wenigstens eine der Klinken als Doppelklinke ausgebildet ist. Es können beispielsweise alle Klinken als Doppelklinken ausgebildet sein. Eine Doppelklinke kann beispielsweise zwei Klinkenelemente aufweisen, welche separat sind. Eine Doppelklinke kann beispielsweise auch zwei in Umfangsrichtung hintereinander liegende Spitzen aufweisen. Solche Klinken können an mehr als einer Stelle eingreifen und beispielsweise an zwei Stellen eine Last übertragen. Die Klinkenelementen können beispielsweise alle mit der Verzahnung im Sperrzustand des Klinkenfreilaufs eingreifen. Die beiden Klinkenelemente können in Axialrichtung hintereinander angeordnet sein aber im gleichen Umfangsbereich und im gleichen Radialbereich. Eine Doppelklinke kann einstückig ausgebildet sein und beispielsweise zwei Eingriffsbereiche aufweisen. Eine Doppelklinke kann für jedes Klinkenelement die gleiche Drehachse haben alternativ oder zusätzlich eine gemeinsame Tasche. Die beiden Klinkenelemente können das gleiche Lager an dem ersten Ring nutzen. Pro Doppelklinke kann nur ein zugeordneter Verformungssensor vorgesehen sein. Es kann auch axial beidseitig ein Verformungssensor pro Doppelklinke an dem ersten Ring angeordnet sein. Es kann auch pro Klinkenelement ein zugeordneter Verformungssensor vorgesehen sein. Durch Doppelklinken kann der Klinkenfreilauf kostengünstig und kompakt sein und trotzdem hohe Lasten übertragen. Es können auch Trippelklinken oder Klinken mit mehr als drei Klinkenelementen vorgesehen sein. Obige Ausführungen zu der Doppelklinke gelten dabei analog. Eine normale Klinke kann beispielsweise nur ein Klinkenelement aufweisen. Beispielsweise können als Klinken als normale Klinken ausgebildet sein.

In einer Ausführungsform der Antriebsanordnung kann es vorgesehen sein, dass die Antriebsanordnung eine Auswertvorrichtung aufweist, welche dazu ausgebildet ist, die durch die Verformungssensoren erfassten Verformungen des ersten Rings auszuwerten. Die Auswertvorrichtung kann einen Mikroprozessor aufweisen. Durch die Auswertung kann beispielsweise eine insgesamt anliegende Kraft berechnet werden. Durch die Auswertung kann auch eine an jeder individuellen Klinke anliegende Last berechnet werden. Die Auswertung kann beispielsweise durch einen tabellarischen Vergleich, eine analytische Berechnung oder ein zuvor trainiertes neuronales Netz erfolgen. Durch die Auswertung können beispielsweise auch Störgrößen herausgerechnet werden.

In einer Ausführungsform der Antriebsanordnung kann es vorgesehen sein, dass die Auswertvorrichtung dazu ausgebildet ist, in Abhängigkeit von der durch die Verformungssensoren erfassten Verformungen des ersten Rings ein Tretverhalten eines Fahrers zu bestimmen. Ein Tretverhalten kann beispielsweise ein Trittfrequenz aufweisen. Ein Tretverhalten kann eine über die Zeit eingeleitete Antriebskraft aufweisen. Ein Tretverhalten kann eine Information aufweisen, ob der Fahrer beim Pedalieren steht oder sitzt. Beispielsweise kann erkannt werden, ob der Fahrer im Stehen tritt oder im Sitzen, da sich hierbei eine Belastung und damit die Verformung der Tretkurbelwelle verändert. Das Tretverhalten kann beispielsweise angezeigt werden oder zur Steuerung eines Antriebsmotors genutzt werden. Durch die Erfassung der Verformung im Bereich jeder Klinke kann eine Verbiegung der Tretkurbelwelle und ein eingebrachtes Moment erkannt werden.

Beispielsweise kann ein unrunder Tritt erkannt werden und dem Fahrer eine Meldung bzw. Korrekturvorschläge gegeben werden. Dadurch kann die Leistungsfähigkeit des Fahrers optimiert werden. Ebenso kann so auch medizinischen Problemen durch ein Fahrradfahren vorgebeugt werden. Beispielweise kann eine Unterstützungsstufe des Antriebsmotors in Abhängigkeit von dem bestimmten Tretverhalten angepasst werden. Ebenso kann auch eine Art der Unterstützung innerhalb einer Umdrehung in Abhängigkeit von dem bestimmten Tretverhalten gesteuert werden. Beispielsweise kann der Antriebsmotor für eine Totpunktkompensation beim Pedalieren gesteuert werden. Durch die Totpunktkompensation kann eine zusätzliche Antriebskraft durch den Antriebsmotor bereitgestellt werden, wenn jeweilige Pedale ganz oben und ganz unten stehen und der Fahrer dann beispielsweise kein Antriebsmoment einbringen kann. Die Steuerung und die Ausgabe kann durch die Auswertvorrichtung erfolgen. Für die Ausgabe kann auch eine Ausgabevorrichtung vorgesehen sein. Diese kann beispielsweise einen Bildschirm aufweisen und alternativ oder zusätzlich entsprechende Daten übermitteln, beispielsweise an ein Smartphone. Für die Steuerung kann auch eine Steuervorrichtung vorgesehen sein, welche den Antriebsmotor steuert. Die Steuervorrichtung kann beispielsweise einen Inverter aufweisen, welcher eine Stromversorgung eines als Elektromotor ausgebildeten Antriebsmotors steuert.

In einer Ausführungsform der Antriebsanordnung kann es vorgesehen sein, dass die Auswertvorrichtung dazu ausgebildet ist, in Abhängigkeit von den durch die Verformungssensoren erfassten Verformungen des ersten Rings ein Eingriffsverhalten des Klinkenfreilaufs zu bestimmen. Das Eingriffsverhalten kann beispielsweise eine Information enthalten, wie stark und alternativ oder zusätzlich wie gut jede Klinke im Eingriff mit der Verzahnung ist. Das Eingriffsverhalten kann eine durch jede Klinke übertragene zugeordnete Antriebskraft aufweisen.

So können Fehler im Klinkenfreilauf erkannt werden. Beispielsweise können die Klinken, die Verzahnung oder der erste Ring mit Taschen in deren Form toleranzbehaftet sein. Ebenso können jeweilige Bauteile nicht vollständig konzentrisch oder parallel sitzen. Dies kann durch Fertigungsfehler oder Montagefehler sowie durch Abnutzungserscheinungen der Bauteile bis hin zu Defekten verursacht sein. Wenn die Klinken untereinander je nach Eingriffsposition des Klinkenfreilaufs nicht immer gleich viel Kraft übertragen, kann dies durch die Auswertvorrichtung erkannt werden. Diese Informationen können einen Teil des bestimmten Eingriffsverhaltens bilden. Anhand des bestimmten Eingriffsverhaltens können jeweilige Verformungssignale korrigiert werden und alternativ oder zusätzlich Störgrößen kompensiert werden und so das anliegende Drehmoment sehr präzise ermittelt werden. Mit Information über Fertigungs- oder Montagefehler lässt sich zudem beispielsweise noch beim Hersteller an der Produktionslinie eine Qualitätssicherung durchführen. Die Auswertvorrichtung kann Fehler in der Fertigung und Montage durch die den Klinken zugeordnete Verformungssensoren als Teil des bestimmten Eingriffsverhaltens erkennen. Mit Information über Abnutzung und Defekte lässt sich zudem eine Wartung bis hin zu einem Austausch planen, beispielsweise im Rahmen einer sogenannten prädiktiven Wartung.

In einer Ausführungsform der Antriebsanordnung kann es vorgesehen sein, dass die Auswertvorrichtung dazu ausgebildet ist, anhand des Eingriffsverhaltens beschädigte Zähne der Verzahnung des zweiten Rings zu identifizieren. Alternativ oder zusätzlich kann die Auswertvorrichtung dazu ausgebildet sein, anhand des Eingriffsverhaltens beschädigte Klinken zu identifizieren. Die Antriebsanordnung kann einen Antriebsmotor und eine Steuervorrichtung aufweisen. Die Steuervorrichtung kann dazu ausgebildet sein, den Antriebsmotor zu steuern, um einen Eingriff der Klinken mit als beschädigt identifizierten Zähnen zu vermeiden. Beispielsweise kann bei einem Eingriff der Klinken mit der Verzahnung bzw. bei einem Wechsel des Klinkenfreilaufs in den Sperrzustand erkannt werden, ob die Klinken mit einem oder mehreren beschädigten Zähnen im Eingriff sind. Dann kann durch ein Antreiben mit dem Antriebsmotor eine Eingriffsposition verändert werden, beispielsweise unter kurzzeitigem Wechsel in den Freigabezustand. Alternativ oder zusätzlich kann eine Position von beschädigten Zähnen gespeichert werden und grundsätzlich ein Wechsel in den Sperrzustand an einer solchen Position verhindert werden, beispielsweise durch entsprechendes Steuern des Antriebsmotors. Dabei kann ein Lagesensor für eine Relativposition der beiden Ringe vorgesehen sein. Durch eine begrenzte Anzahl an Zähnen der Verzahnung ergibt sich eine begrenzte Zahl von Eingriffsposition. Über längere Zeit können jeweilige Messwerte des Eingriffsverhaltens gespeichert und verglichen werden. Hat dann ein Zahn einen Schaden, kann dies anhand jeweiliger über den Zeitverlauf bekannten Belastungsverhältnisse der Klinken identifiziert werden. In diesem Fall kann der Antriebsmotor beispielsweise kurz einen der Ringe über eine Kurbeldrehzahl des Fahrers hinaus beschleunigen. Dadurch klinkt der Klinkenfreilauf kurz aus. Sobald der Antriebsmotor in seiner Drehzahl wieder an eine Drehzahl der Tretkurbelwelle angleicht, wechselt der Klinkenfreilauf wieder in den Sperrzustand. Durch diese Steuerung kann eine Eingriffsposition versetzt werden, in welcher der beschädigte Zahn nicht weiter im Eingriff mit einer Klinke ist. Damit kann ein Komplettausfall und Folgeschäden vermieden werden. Somit kann der Klinkenfreilauf eine höhere Lebensdauer haben.

Ein zweiter Aspekt betrifft ein Verfahren zum Betreiben einer Antriebsanordnung gemäß dem ersten Aspekt. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Das Verfahren weist einen Schritt eines Erfassens von einer Verformung des ersten Rings des Klinkenfreilaufs bei jeder Klinke mit dem zugeordneten Verformungssensor auf. Das Verfahren weist zudem einen Schritt eines Auswertens der erfassten Verformungen des ersten Rings auf. Beispielsweise kann eine anliegende Antriebskraft oder ein übertragenes Drehmoment durch die Auswertung bestimmt werden. Es kann auch ein Eingriffsverhalten und alternativ oder zusätzlich ein Tretverhalten bestimmt werden.

In einer Ausführungsform des Verfahrens kann es vorgesehen sein, dass ein Bestimmen eines Tretverhaltens des Fahrers in Abhängigkeit von den erfassten Verformungen des ersten Rings erfolgt. Zudem kann das Verfahren einen Schritt eines Ausgebens des bestimmten Tretverhaltens an den Fahrer aufweisen. Dadurch kann der Fahrer sein Tretverhalten kontrollieren. Beispielsweise kann dem Fahrer ein Graph mit seiner eingeleiteten Antriebskraft über die Zeit angezeigt werden. Alternativ oder zusätzlich kann ein Bestimmen von Änderungsvorschlägen für das Tretverhalten und Ausgeben der Änderungsvorschläge an den Fahrer erfolgen. So können dem Fahrer beispielsweise Hinweise für einen runderen Tritt und effizienteres Benutzen des Fahrrads gegeben werden. Alternativ oder zusätzlich kann ein Steuern des Antriebsmotors der Antriebsanordnung in Abhängigkeit von dem bestimmten Tretverhalten erfolgen. Beispielsweise kann eine Veränderung einer Unterstützungsstufe erfolgen oder eine unterstützende Antriebskraft innerhalb einer Umdrehung der Tretkurbelwelle variiert werden, beispielsweise um einen Totpunkt zu kompensieren. Die Steuerung des Antriebsmotors der Antriebsanordnung in Abhängigkeit von dem bestimmten Tretverhalten kann dabei mit einer Steuerung des Antriebsmotors in Abhängigkeit von der bestimmten anliegenden Antriebskraft oder dem bestimmten übertragenen Drehmoment überlagert werden, beispielsweise durch Verschieben einer Steuerkennlinie.

In einer Ausführungsform des Verfahrens kann es vorgesehen sein, dass ein Bestimmen eines Eingriffsverhaltens des Klinkenfreilaufs in Abhängigkeit von den erfassten Verformungen des ersten Rings erfolgt. Zudem kann das Verfahren einen Schritt eines Bestimmens eines durch den Klinkenfreilauf übertragenen Drehmoments in Abhängigkeit von dem bestimmten Eingriffsverhalten aufweisen. Beispielsweise können erfasste Verformungswerte in Abhängigkeit von dem bestimmten Eingriffsverhalten modifiziert werden und das durch den Klinkenfreilauf übertragene Drehmoment auf Basis der modifizierten Verformungswerte bestimmt werden. Alternativ oder zusätzlich kann ein Bestimmen von Montagefehlern bei dem Klinkenfreilauf in Abhängigkeit von dem bestimmten Eingriffsverhalten erfolgen. Alternativ oder zusätzlich können Fertigungsfehlern bei dem Klinkenfreilauf in Abhängigkeit von dem bestimmten Eingriffsverhalten bestimmt werden. Die Fertigungsfehler und Montagefehler können einer Qualitätssicherung angezeigt werden, beispielsweise als generische Fehlermeldung oder auch mit Informationen über eine Art des konkret vorliegenden Fehlers. Alternativ oder zusätzlich kann eine Wartungsvorhersage für den Klinkenfreilauf in Abhängigkeit von dem bestimmten Eingriffsverhalten bestimmt werden. Beispielsweise kann berechneten werden, wann der zweite Ring des Klinkenfreilaufs oder der Klinkenfreilauf generell ausgetauscht werden soll. Diese Vorhersage kann beispielsweise als verbleibende Benutzungszeit oder verbleibende Laufleistung ausgegeben werden. Alternativ oder zusätzlich kann ein Identifizieren von beschädigten Zähnen der Verzahnung des zweiten Rings und Steuern des Antriebsmotors der Antriebsanordnung, um einen Eingriff der Klinken mit als beschädigt identifizierten Zähnen zu vermeiden.

Ein dritter Aspekt betrifft ein Fahrrad mit einer Antriebsanordnung gemäß dem ersten Aspekt und einem Abtriebselement. Das Abtriebselement kann beispielsweise ein hinteres Laufrad des Fahrrads sein. Das Abtriebselement kann durch die Antriebsanordnung antreibbar sein, beispielsweis wenn sich der Klinkenfreilauf in seinem Sperrzustand befindet. Die Antriebsanordnung kann mit dem Verfahren gemäß dem zweiten Aspekt betrieben werden. Jeweilige Vorteile und weitere Merkmale sind der Beschreibung des ersten bzw. zweiten Aspekts zu entnehmen, wobei Ausgestaltungen des ersten und des zweiten Aspekts auch Ausgestaltungen des dritten Aspekts und umgekehrt bilden.

### Kurze Beschreibung der Figuren

Fig. 1 veranschaulicht eine Einbausituation einer Antriebsanordnung mit einem Klinkenfreilauf in einem Fahrrad.
Fig. 2 veranschaulicht eine erste Ausführungsform eines Klinkenfreilauf der Antriebsanordnung gemäß Fig. 1 in einer schematischen Seitenansicht entlang einer Drehachse des Klinkenfreilaufs.
Fig. 3 veranschaulicht eine zweite Ausführungsform eines Klinkenfreilauf der Antriebsanordnung gemäß Fig. 1 in einer schematischen Seitenansicht entlang einer Drehachse des Klinkenfreilaufs.
Fig. 4 veranschaulicht den Klinkenfreilauf gemäß Fig. 3 in einer schematischen Perspektivansicht.
Fig. 5 veranschaulicht ein Verfahren zum Betreiben der Antriebsanordnung gemäß Fig. 1.

### Detaillierte Beschreibung von Ausführungsformen

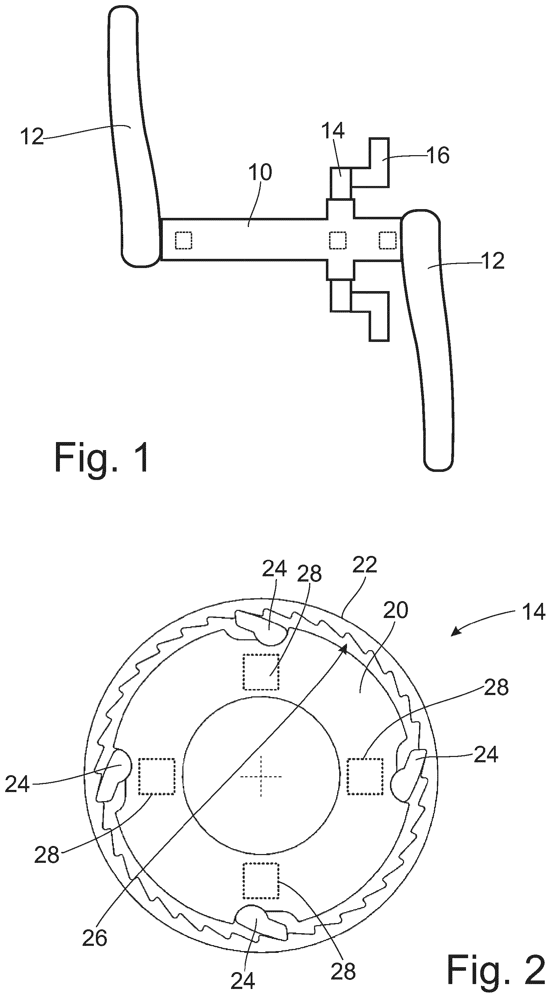

Fig. 1 veranschaulicht schematisch einen Einbau einer Antriebsanordnung in einem Fahrrad. Die Antriebsanordnung weist eine Tretkurbelwelle 10 mit beidseitig daran drehfest befestigten Tretkurbelarmen 12 auf. An den Tretkurbelarmen 12 ist jeweils ein nicht dargestelltes Pedal drehbar befestigt. Die Antriebsanordnung weist zudem einen Klinkenfreilauf 14 und eine Abtriebswelle 16 mit Ritzel auf. Der Klinkenfreilauf 14 kann selbsttätig zwischen einem Sperrzustand, in welchem der Klinkenfreilauf 14 die Tretkurbelwelle 10 drehfest mit der Abtriebswelle 16 verbindet, und einem Freigabezustand, in welchem die Tretkurbelwelle 10 relativ zu der Abtriebswelle 16 rotieren kann, in Abhängigkeit von einer relativen Drehrichtung der Tretkurbelwelle 10 und der Abtriebswelle 16 zueinander wechseln. In dem Sperrzustand ist entsprechend durch den Klinkenfreilauf 14 ein Drehmoment übertragbar.

Die Antriebsanordnung weist eine Sensorvorrichtung auf, welche dazu ausgebildet ist, eine Verformung eines Bauteils des Klinkenfreilaufs 14 zu erfassen. Auf Basis dieser Verformung wird ein an der Tretkurbelwelle 10 durch den Fahrer eingebrachte Antriebskraft bestimmt.

Eine erste Ausführungsform des Klinkenfreilaufs 14 ist in einer schematischen Seitenansicht in Fig. 2 dargestellt. Der Klinkenfreilauf 14 weist einen ersten Ring 20 auf, welcher als Innenring ausgebildet ist. Der erste Ring 20 bildet eine Scheibe aus, welche permanent drehfest mit der Tretkurbelwelle 10 verbunden ist. Koaxial und radial außen zu dem ersten Ring 20 ist ein zweiter Ring 22 angeordnet. Der zweite Ring 22 ist permanent drehfest mit der Abtriebswelle 16 verbunden. An dem ersten Ring 20 sind vier Klinken 24 radial außenseitig beweglich gelagert. Der zweite Ring 22 weist eine radial innenseitige durchgehende Verzahnung 26 auf, welche den Klinken 24 zugewandt ist. Die Verzahnung 26 ist für einen Eingriff mit den Klinken 24 ausgebildet. Fig. 2 zeigt den Klinkenfreilauf 14 in einem Sperrzustand, in welchem sich die Klinken 24 in Eingriff mit der Verzahnung 26 befinden. Entsprechend kann ein Drehmoment aufgrund einer auf die Tretkurbel 10 wirkenden Antriebskraft von dem ersten Ring 20 an den zweiten Ring 22 übertragen werden.

Weiterhin sind in Fig. 2 vier Verformungssensoren 28 der Sensorvorrichtung gezeigt. Jeder Verformungssensor 28 ist einer der Klinken 24 zugeordnet. Die Verformungssensoren 28 sind stirnseitig auf dem ersten Ring 20 aufgeklebt und als Dehnungsmessstreifen ausgebildet. Jeder Verformungssensor 28 ist radial innen zu der zugeordneten Klinke 24 in dem gleichen Umfangsbereich wie die zugeordnete Klinke 24 benachbart zu der zugeordneten Klinke 24 angeordnet. Entsprechend erfasst die Sensorvorrichtung einen isolierten Messwert einer Verformung für jede einzelne Klinke 24, aus welchem geschlossen werden kann, wieviel Last an dieser Klinke 24 jeweils anliegt. Dadurch können Störgrößen, beispielsweise verursacht durch Reaktionskräfte an den Klinken 24 und eine Durchbiegung der Tretkurbelwelle 10 unter Last, herausgerechnet werden und eine tatsächlich anliegende Antriebskraft sehr präzise bestimmt werden.

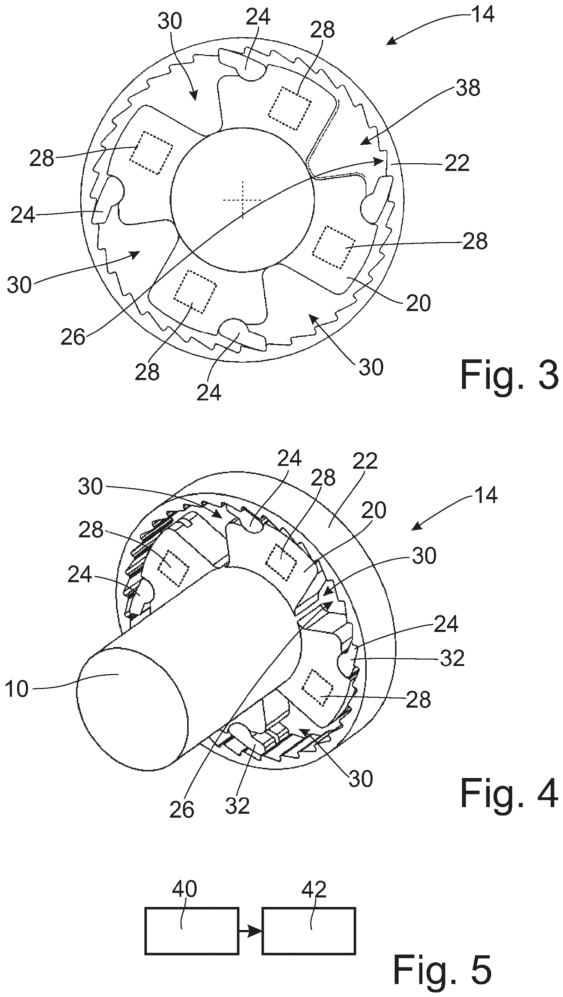

Fig. 3 zeigt eine zweite Ausführungsform des Klinkenfreilaufs 14. Im Folgenden werden nur Unterschiede zu der ersten Ausführungsform beschrieben. Bei der zweiten Ausführungsform weist der erste Ring 20 im Umfangsbereichsbereichen zwischen benachbarten Klinken 24 jeweils eine Ausnehmung 30 auf. Diese Ausnehmungen 30 sind als radial nach innen ragende keilförmige Freiräume ausgebildet, an welchen die Scheibe des ersten Rings 20 unterbrochen ist. In anderen Ausführungsformen sind die Ausnehmungen 30 anders geformt. Durch die Ausnehmungen 30 werden die Bereiche des ersten Rings 20, an welchen die Verformungssensoren 28 befestigt sind, jeweils in Umfangsrichtung räumlich voneinander getrennt. Dadurch wird eine Verformung und damit auch eine Verformungsmessung, erfolgend benachbart zu jeder Klinke 24 durch den jeweils zugeordneten Verformungssensor 28, nicht oder zumindest weniger durch eine Klinkenlast an den übrigen Klinken 24 beeinflusst.

Die Verformungssensoren 28 sind bei der zweiten Ausführungsform nicht mehr in dem gleichen Umfangsbereich wie die jeweils zugeordnete Klinke 24 angeordnet. Stattdessen ist jeder Verformungssensor 28 in Umfangsrichtung hinter der zugeordneten Klinke 24 in einer Richtung einer von der jeweiligen Klinke 24 auf den ersten Ring 20 wirkenden Kraft an dem ersten Ring 20 angeordnet. Die Richtung ergibt sich dabei durch einen Umfangsanteil eines Vektors, welcher sich von einem Ende jeder Klinken 24, welches mit der Verzahnung 26 eingreift, zu einem Ende jeder Klinke 24, welches auf dem ersten Ring 20 aufliegt und an dem ersten Ring 20 drehbar gelagert ist, erstreckt.

Die Klinken 24 sind bei der ersten Ausführungsform als Einfachklinken, also mit einem Klinkenelement, ausgebildet. In der schematischen Perspektivansicht der zweiten Ausführungsform in Fig. 4 ist zu erkennen, dass die Klinken 24 der zweiten Ausführungsform des Klinkenfreilaufs 14 einen mittleren in Umfangsrichtung verlaufenden Spalt aufweisen. In diesem Spalt ist eine Ringfeder angeordnet, welche alle Klinkenelemente 32 gemeinsam in den Eingriff drückt..

In Fig. 5 ist ein Verfahren zum Betreiben der Antriebsanordnung veranschaulicht. In einem ersten Schritt 40 erfolgt ein Erfassen von einer Verformung des ersten Rings 20 des Klinkenfreilaufs 14 bei jeder Klinke 24 mit dem zugeordneten Verformungssensor 28. In einem zweiten Schritt 42 erfolgt ein Auswerten der erfassten Verformungen des ersten Rings 20. In einer Ausführungsform des Verfahrens wird so die an dem Klinkenfreilauf 14 anliegende Antriebskraft ermittelt. In einer weiteren Ausführungsform des Verfahrens wird alternativ oder zusätzlich so ein Tretverhaltens des Fahrers in Abhängigkeit von den erfassten Verformungen des ersten Rings 20 ermittelt. Dieses Tretverhalten wird an den Fahrer ausgegeben. Alternativ oder zusätzlich werden Änderungsvorschlägen für das Tretverhalten bestimmt und diese Änderungsvorschläge an den Fahrer ausgegeben. Alternativ oder zusätzlich erfolgt ein Steuern eines Antriebsmotors der Antriebsanordnung in Abhängigkeit von dem bestimmten Tretverhalten. In einer weiteren Ausführungsform des Verfahrens wird alternativ oder zusätzlich so ein Eingriffsverhaltens des Klinkenfreilaufs 14 in Abhängigkeit von den erfassten Verformungen des ersten Rings 20 bestimmt. In Abhängigkeit von dem Eingriffsverhalten werden Montagefehler und Fertigungsfehler bestimmt und ausgegeben. Alternativ oder zusätzlich wird eine Wartungsvorhersage für den Klinkenfreilauf 14 in Abhängigkeit von dem bestimmten Eingriffsverhalten erstellt. Alternativ oder zusätzlich erfolgt ein Identifizieren von beschädigten Zähnen der Verzahnung 26 des zweiten Rings 22 und ein Steuern des Antriebsmotors der Antriebsanordnung, sofern vorhanden, um einen Eingriff der Klinken 24 mit als beschädigt identifizierten Zähnen zu vermeiden.

### Bezugszeichen

- 10: Tretkurbelwelle
- 12: Tretkurbelarme
- 14: Klinkenfreilauf
- 16: Abtriebswelle
- 20: erster Ring
- 22: zweiter Ring
- 24: Klinke
- 26: Verzahnung
- 28: Verformungssensor
- 30: Ausnehmung
- 32: Klinkenelement
- 40: Erfassen einer Verformung des ersten Rings
- 42: Auswerten der erfassten Verformungen des ersten Rings

## Patentansprüche

1. Antriebsanordnung für ein Fahrrad, wobei die Antriebsanordnung einen Klinkenfreilauf (14) aufweist, wobei der Klinkenfreilauf (14) einen ersten Ring (20) mit daran beweglich gelagerten Klinken (24) und einen zweiten Ring (22) mit einer Verzahnung (26) aufweist, und wobei Antriebsanordnung wenigstens eine Sensorvorrichtung aufweist, welche dazu ausgebildet ist, eine Verformung des ersten Rings (20) des Klinkenfreilaufs (14) aufgrund einer anliegenden Antriebskraft zu erfassen, wobei die Sensorvorrichtung pro Klinke (24) jeweils einen zugeordneten Verformungssensor (28) aufweist.

2. Antriebsanordnung nach einem der vorhergehenden Ansprüche, **dadurch gekennzeichnet, dass** der erste Ring (20) als Innenring ausgebildet ist und der zweite Ring (22) als Außenring.

3. Antriebsanordnung nach Anspruch 1, **dadurch gekennzeichnet, dass** der erste Ring (20) als Außenring ausgebildet ist und der zweite Ring (22) als Innenring.

4. Antriebsanordnung nach einem der vorhergehenden Ansprüche, **dadurch gekennzeichnet, dass** jeder Verformungssensor (28) benachbart zu der zugeordneten Klinke (24) an dem ersten Ring (20) angeordnet ist.

5. Antriebsanordnung nach einem der vorhergehenden Ansprüche, **dadurch gekennzeichnet, dass** der erste Ring (20) in Umfangsbereichen zwischen benachbarten Klinken (24) jeweils eine Ausnehmung (30) aufweist.

6. Antriebsanordnung nach einem der vorhergehenden Ansprüche, **dadurch gekennzeichnet, dass** jeder Verformungssensor (28) in Umfangsrichtung hinter der zugeordneten Klinke (24) in einer Richtung einer von der jeweiligen Klinke (24) auf den ersten Ring (20) wirkenden Kraft an dem ersten Ring (20) angeordnet ist.

7. Antriebsanordnung nach einem der vorhergehenden Ansprüche, **dadurch gekennzeichnet, dass** die Antriebsanordnung eine Auswertvorrichtung aufweist, welche dazu ausgebildet ist, die durch die Verformungssensoren (28) erfassten Verformungen des ersten Rings (20) auszuwerten.

8. Antriebsanordnung nach Anspruch 7, **dadurch gekennzeichnet, dass** die Auswertvorrichtung dazu ausgebildet ist, in Abhängigkeit von der durch die Verformungssensoren (28) erfassten Verformungen des ersten Rings (20) ein Tretverhalten eines Fahrers zu bestimmen.

9. Antriebsanordnung nach Anspruch 7 oder 8, **dadurch gekennzeichnet, dass** die Auswertvorrichtung dazu ausgebildet ist, in Abhängigkeit von den durch die Verformungssensoren (28) erfassten Verformungen des ersten Rings (20) ein Eingriffsverhalten des Klinkenfreilaufs (14) zu bestimmen.

10. Antriebsanordnung nach Anspruch 9, **dadurch gekennzeichnet, dass** die Auswertvorrichtung dazu ausgebildet ist, anhand des Eingriffsverhaltens beschädigte Zähne der Verzahnung (26) des zweiten Rings (22) zu identifizieren und die Antriebsanordnung einen Antriebsmotor und eine Steuervorrichtung aufweist, wobei die Steuervorrichtung dazu ausgebildet ist, den Antriebsmotor zu steuern, um einen Eingriff der Klinken (24) mit als beschädigt identifizierten Zähnen zu vermeiden.

11. Verfahren zum Betreiben einer Antriebsanordnung nach einem der vorhergehenden Ansprüche, wobei das Verfahren die folgenden Schritte aufweist:
- Erfassen (40) von einer Verformung des ersten Rings (20) des Klinkenfreilaufs (14) bei jeder Klinke (24) mit dem zugeordneten Verformungssensor (28); und
- Auswerten (42) der erfassten Verformungen des ersten Rings (20).

12. Verfahren nach Anspruch 11, wobei das Verfahren ferner die folgenden Schritte aufweist:
- Bestimmen eines Tretverhaltens des Fahrers in Abhängigkeit von den erfassten Verformungen des ersten Rings (20); und
wenigstens einer der folgenden Reaktionsschritte:
- Ausgeben des bestimmten Tretverhaltens an den Fahrer;
- Bestimmen von Änderungsvorschlägen für das Tretverhalten und Ausgeben der Änderungsvorschläge an den Fahrer; und
- Steuern des Antriebsmotors der Antriebsanordnung in Abhängigkeit von dem bestimmten Tretverhalten.

13. Verfahren nach Anspruch 11 oder 12, wobei das Verfahren ferner die folgenden Schritte aufweist:
- Bestimmen eines Eingriffsverhaltens des Klinkenfreilaufs (14) in Abhängigkeit von den erfassten Verformungen des ersten Rings (20); und
wenigstens einer der folgenden Reaktionsschritte:
- Bestimmen eines durch den Klinkenfreilauf (14) übertragenen Drehmoments in Abhängigkeit von dem bestimmten Eingriffsverhalten;
- Bestimmen von Montagefehlern bei dem Klinkenfreilauf (14) in Abhängigkeit von dem bestimmten Eingriffsverhalten;
- Bestimmen von Fertigungsfehlern bei dem Klinkenfreilauf (14) in Abhängigkeit von dem bestimmten Eingriffsverhalten;
- Erstellen einer Wartungsvorhersage für den Klinkenfreilauf (14) in Abhängigkeit von dem bestimmten Eingriffsverhalten; und
- Identifizieren von beschädigten Zähnen der Verzahnung (26) des zweiten Rings (22) und Steuern des Antriebsmotors der Antriebsanordnung, um einen Eingriff der Klinken (24) mit als beschädigt identifizierten Zähnen zu vermeiden.

14. Fahrrad mit einer Antriebsanordnung nach einem der vorhergehenden Ansprüche und einem Abtriebselement, welches durch die Antriebsanordnung antreibbar ist.
